# EUROPÄISCHE PATENTSCHRIFT

(11) **EP 3 732 955 B1**
(45) Veröffentlichungstag und Bekanntmachung des Hinweises auf die Patenterteilung: **13.10.2021**
(21) Anmeldenummer: 20000167.5
(22) Anmeldetag: 27.04.2020
(51) Int. Cl.: A01F 15/07

(54) **BALLENPRESSE FÜR LANDWIRTSCHAFTLICHES ERNTEGUT**
BALLER FOR AGRICULTURAL HARVESTED MATERIALS
PRESSE À BALLES POUR RÉCOLTE AGRICOLE

(30) Priorität: 30.04.2019 DE 102019003067
(43) Veröffentlichungstag der Anmeldung: 04.11.2020
(73) Patentinhaber: Maschinenfabrik Bernard Krone GmbH & Co. KG, 48480 Spelle (DE)
(72) Erfinder: Schnieders, Felix, 49809 Lingen (DE); van Bassen, Aloys, 49832 Freren (DE)

(56) Entgegenhaltungen:
- EP-A1- 1 080 628
- US-A- 5 020 299
- US-A1- 2010 236 190
- US-A1- 2018 317 393
- US-B2- 10 070 591

## Beschreibung

Die Erfindung betrifft eine Ballenpresse für landwirtschaftliches Erntegut. Die Ballenpresse hat eine Ballenkammer sowie eine Mehrzahl von die Ballenkammer umgrenzenden Presselementen, die im Betrieb umlaufen. Zwischen einem ersten Paar von Presselementen ist ein erster Spalt und zwischen einem zweiten Paar von Presselementen ist ein zweiter Spalt vorgesehen. Die Ballenpresse hat außerdem eine Bindeeinrichtung, die von einer Ausgangsstellung in eine Bindestellung überführbar ist. In der Bindestellung ist die Bindeeinrichtung zur Führung eines Bindemittels durch den ersten Spalt in die Ballenkammer ausgebildet.

Im Betrieb nimmt die Ballenpresse zunächst landwirtschaftliches Erntegut in die Ballenkammer auf. Innerhalb der Ballenkammer wird das Erntegut durch die umlaufenden Presselemente rotiert und verdichtet. Nach ausreichender Verdichtung bzw. Erreichen einer ausreichenden Ballengröße stellt die Bindeeinrichtung Bindemittel zur Umwicklung des gebildeten Ballens bereit.

Die Führung des Bindemittels durch den ersten Spalt in die Ballenkammer wird beeinträchtigt durch außerhalb der Ballenkammer befindliches Erntegut. Dieses legt sich außerhalb der Ballenkammer auf das Bindemittel auf und verhakt sich darin. Nachteilig daran ist, dass es infolgedessen so zu einer ungleichmäßigen Einführung des Bindemittels in die Ballenkammer kommt und eine straffe Anlage dessen am zu bindenden Ballen behindert wird.

Die Druckschrift EP 1 080 628 A1 offenbart eine Rundballenpresse mit einer Abgabebaugruppe zur Abgabe von Umwicklungsmaterial zum Umwickeln der Außenoberfläche eines zylindrischen Packens aus Erntematerial und mit Speichereinrichtungen zum Speichern eines Vorrats an Umwicklungsmaterial darin.

Aufgabe der vorliegenden Erfindung ist die Bereitstellung einer leistungsfähigen Ballenpresse, die die vorgenannten Nachteile vermeidet.

Erfindungsgemäß wird die Aufgabe dadurch gelöst, dass die Ballenpresse ein Trennelement hat, das in einer Trennstellung einen an den zweiten Spalt angrenzenden Aufnahmeraum zur Aufnahme von durch den zweiten Spalt und/oder an den umlaufenden Presselementen hindurchgetretenem Erntegut von der Bindeeinrichtung in der Bindestellung abgrenzt.

Bei der Ballenpresse handelt es sich insbesondere um eine Rundballenpresse für Erntegut wie etwa Heu oder Stroh. Dieses wird im Betrieb bevorzugt über eine Pick-Up aufgenommen und insbesondere nach Passieren einer Schneidvorrichtung und/oder einer Fördereinrichtung der Ballenkammer zugeführt. Die Ballenkammer hat während des Pressens des Ballens insbesondere eine konstante Größe (Festkammer-Ballenpresse) oder eine zumindest teilweise variable Größe (variable Ballenpresse oder teilvariable Ballenpresse).

Die Ballenkammer wird von im Betrieb umlaufenden Presselementen umgrenzt, die insbesondere als Walzen und/oder Bänder bzw. Gurte ausgebildet sind. Insbesondere wird ein Großteil der Ballenkammer von einem flexiblen Band bzw. Gurt umgeben und der Rest der Ballenkammer, bis auf die Einlassöffnung, von als Walzen ausgebildeten Presselementen umgrenzt. Der erste Spalt, durch den das Bindemittel durch die Bindeeinrichtung in der Bindestellung zuzuführen ist, wird insbesondere durch zwei als Walzen ausgebildete Presselemente ausgebildet. Der zweite Spalt wird insbesondere einerseits durch ein als Walze ausgebildetes Presselement und andererseits durch ein als Band bzw. Gurt ausgebildetes Presselement ausgebildet. Im Falle eines nicht geschlossenen Bandes bzw. Gurtes bildet bevorzugt ein benachbart zum als Walze ausgebildeten Presselement am zweiten Spalt angeordnetes Umlenkelement des Bandes bzw. Gurtes den zweiten Spalt mit aus.

Im Betrieb sind bevorzugt die den ersten Spalt ausbildenden Presselemente gleichläufig umlaufend und mit ihrem dem ersten Spalt zugewandten Anteil der Ballenkammer zufördernd ausgebildet, um das Bindemittel beidseitig in die Ballenkammer ziehen zu können. Am zweiten Spalt ist insbesondere zumindest eines der diesen begrenzenden Presselemente, insbesondere das als Band bzw. Gurt ausgebildete, mit einem dem zweiten Spalt zugewandten Anteil im Betrieb aus der Ballenkammer ausfördernd umlaufend ausgebildet. Bevorzugt begrenzt eines der Presselemente sowohl den ersten Spalt als auch den zweiten Spalt. In diesem Fall sind die den zweiten Spalt ausbildenden Presselemente im Betrieb insbesondere gegenläufig rotierend und jeweils am zweiten Spalt aus der Ballenkammer ausfördernd ausgebildet. Dadurch lässt sich eine besonders kompakte Bauform der Ballenpresse erreichen.

Sowohl der erste Spalt als auch der zweite Spalt ist bevorzugt am vorderen Bereich der Ballenkammer angeordnet. Alternativ lassen sich der erste und der zweite Spalt jedoch auch anders orientiert, etwa im hinteren Teil der Ballenkammer anordnen. Der erste Spalt ist insbesondere unterhalb des zweiten Spaltes angeordnet.

Die Bindeeinrichtung ist insbesondere benachbart zum ersten Spalt angeordnet und umfasst bevorzugt ein Bindemittelreservoir wie eine Netzrolle. Während der Aufnahme von Erntegut in die Ballenkammer ist die Bindeeinrichtung in der Ausgangsstellung angeordnet. Nach Beenden der weiteren Füllung der Ballenkammer mit Erntegut wird die Bindeeinrichtung in die Bindestellung überführt und dadurch ein Ende des Bindemittels durch den ersten Spalt und in die Ballenkammer geführt. Während des Bindezyklus, d.h. während der Umwicklung des Ballens mit dem Bindemittel, wird der Ballen bevorzugt durch die Presselemente wie beim Pressen auch rotiert. Nach Abschluss eines Bindezyklus wird das Bindemittel zwischen dem fertigen Ballen und dem Bindemittelreservoir insbesondere durchschnitten und die Bindeeinrichtung in die Ausgangsstellung rücküberführt.

Durch die Ausbildung des Aufnahmeraumes durch das Trennelement lässt sich die Menge von sich während des Bindezyklus auf dem Bindemittel außerhalb der Ballenkammer ablagernden Erntegutes, das zuvor insbesondere durch den zweiten Spalt aus der Ballenkammer ausgetreten ist, signifikant verringern. In der Trennstellung bildet das Trennelement insofern einen Aufnahmeraum aus, als dass das vorgenannte Erntegut sich in diesem zumindest zeitweise ablagert bzw. ein Weg zum Gelangen dessen zum Bindemittel oder zur Bindeeinrichtung blockiert wird. Dabei wird nach der Aufnahme des vorbeschriebenen Erntegutes in den Aufnahmeraum insbesondere zumindest zeitweise eine Relativbewegung des Erntegutes zum Trennelement verhindert.

Der Aufnahmeraum ist außerhalb der Ballenkammer und bevorzugt zumindest anteilig unterhalb des zweiten Spaltes erstreckend angeordnet. Er ist insbesondere wannen- oder V-förmig. Das Trennelement ist in der Trennstellung insbesondere zwischen dem Aufnahmeraum und der Bindeeinrichtung angeordnet. Bevorzugt ist der Aufnahmeraum nicht nach oben hin abgeschlossen, um eine Verstopfung innerhalb des Aufnahmeraumes zu vermeiden. Eine unterseitige Umgrenzung des Aufnahmeraumes ist insofern hinreichend, als dass das durch den zweiten Spalt hindurchgetretene Erntegut sich schwerkraftbedingt bereits dann zuverlässig im Aufnahmeraum anordnet. Der Aufnahmeraum hat in vertikaler und/oder in Fahrtrichtung der Ballenpresse eine Erstreckung, die größer ist als die Spaltweite der zweite Spalt und kann auch ein Vielfaches davon sein.

Durch die erfindungsgemäße Ausbildung der Ballenpresse kann das Bindemittel der Ballenkammer während eines Bindezyklus auf konventionelle Weise zugeführt werden, ohne dass die Bindung von durch den zweiten Spalt hindurchgetretenem Erntegut deutlich beeinträchtigt wird. Insbesondere können die den zweiten Spalt umgrenzenden Presselemente während der Bindung in für die Pressung bzw. Umwicklung des Ballens gegensinnig umlaufen und somit ihre Hauptaufgaben (insbesondere Rotation des Ballens und Einzug des Bindemittels) weiter uneingeschränkt erfüllen. Dabei aus der Ballenkammer austretendes Erntegut schränkt die Bindung nicht weiter ein, wodurch die Erfindung zu einer höheren Zuverlässigkeit der Ballenpresse und einem optimal dadurch gebundenen Ballen führt.

Vorzugsweise ist das Trennelement von einer Trennstellung in eine Offenstellung überführbar. In der Offenstellung dient das Trennelement der Ausbildung einer Auslassöffnung für aufgenommenes Erntegut. Im Betrieb wird das Trennelement insbesondere nach Abschluss eines Bindezyklus bzw. mit oder nach Verlassen der Bindeeinrichtung der Bindestellung in die Offenstellung überführt. Durch Ausbildung der Auslassöffnung, wozu das Trennelement insbesondere von dem Presselement, dem es in der Trennstellung am nächsten liegt, beabstandet wird, kann das Erntegut aus dem vormals gebildeten Aufnahmeraum austreten und insbesondere der Ballenkammer erneut zugeführt werden. Nach Passieren der Auslassöffnung tritt das Erntegut insbesondere durch den Raum, in dem während des Bindezyklus ein Bindematerialabschnitt angeordnet ist. Dadurch liegt spätestens zu Beginn eines folgenden Bindezyklus und nach Überführung des Trennelementes von der Offenstellung in die Trennstellung erneut der Aufnahmeraum vor, der dann zunächst leer und geeignet zur Aufnahme einer ausreichenden Menge von Erntegut vorliegt.

Bevorzugt ist das Trennelement in der Trennstellung oberhalb zumindest eines Teils der Bindeeinrichtung angeordnet. In diesem Fall ist insbesondere der zweite Spalt oberhalb des ersten Spaltes angeordnet. Hierdurch lässt sich der Aufnahmeraum insofern einfach ausbilden, als dass eine Aufnahme des Erntegutes schwerkraftbedingt stattfindet und insbesondere nach Überführung des Trennelementes in die Offenstellung eine Entleerung ebenso schwerkraftbedingt stattfindet.

Besonders bevorzugt ist das Trennelement in der Trennstellung oberhalb einer von der Ballenkammer beabstandeten Bindemittelzuführwalze angeordnet. Zwischen der Bindemittelzuführwalze und der Ballenkammer ist insbesondere eines der den ersten Spalt umgrenzenden Presselemente angeordnet. Die Bindemittelzuführwalze dient dem Abrollen des Bindemittels und dadurch, ebenso wie die Bindeeinrichtung, der Führung des Bindemittels durch den ersten Spalt. Durch die Positionierung zumindest eines Teils des Trennelementes in der Trennstellung bzw. zumindest eines Teils des Aufnahmeraumes oberhalb des der Bindemittelzuführwalze wird eine Beeinträchtigung des Bindens im besonders sensiblen Kontaktbereich zwischen Bindemittel und Bindemittelzuführwalze vermieden. Außerdem führt diese Ausbildung zu einer besonders kompakten Bauform der Ballenpresse.

In einer vorteilhaften Ausgestaltung der Erfindung wird der Aufnahmeraum durch das Trennelement in der Trennstellung über eine Breite zumindest mitbegrenzt, die zumindest im Wesentlichen der Breite der Ballenkammer entspricht. Insbesondere hat sowohl das Trennelement und auch das diesem in der Trennstellung nächstliegende Presselement eine Breite, die derjenigen der Ballenkammer entspricht. Die Breite wird dabei insbesondere horizontal und quer zur Fahrtrichtung der Ballenpresse gemessen. Die Breiten stimmen dabei insbesondere insoweit überein, als dass sie um höchstens 30 %, bevorzugt um höchstens 10 % voneinander abweichen. Durch diese Ausbildung der Erfindung wird eine Beeinträchtigung des Bindezyklus umfassend vermieden.

Vorzugsweise hat eine in der Trennstellung des Trennelementes den Aufnahmeraum zugewandte Oberfläche des Trennelementes relativ zu einer Horizontalen zumindest abschnittsweise, insbesondere insgesamt eine Steigung von zumindest 30°, bevorzugt von zumindest 45°, besonders bevorzugt von zumindest 75°. Die Oberfläche ist dabei insbesondere für Erntegut undurchlässig. Durch diese Steigung gelangt das im Aufnahmeraum befindliche Erntegut zuverlässig schwerkraftbedingt in den tiefst möglichen Bereich des Aufnahmeraumes, aus dem ein Ausdringen praktisch einzig durch Überführung des Trennelementes in die Offenstellung möglich ist. Bei einer bevorzugt möglichen Überführung des Trennelementes in die Offenstellung rutscht das im Aufnahmeraum befindliche Erntegut insbesondere an der Oberfläche entlang und fällt hinunter.

Bevorzugt ist das Trennelement translatorisch beweglich gelagert. Besonders bevorzugt ist das Trennelement verschieblich gelagert. Insbesondere ist das Trennelement in eine Richtung verschieblich, dessen Steigung relativ zur Horizontalen derjenigen der vorbeschriebenen Oberfläche entspricht. Die Lagerung wird insbesondere umgesetzt durch zumindest eine Gleit- oder Führungsschiene. Durch die vorgeschrieben Lagerung ist eine einfache Integration des Trennelementes in konventionellen Ballenpressen möglich, ohne Änderungen derer zu Lasten ihrer Pressleistung bzw. Bindezyklusdauer vornehmen zu müssen.

Alternativ oder zusätzlich zum Vorstehenden ist das Trennelement schwenkbeweglich gelagert. Insbesondere schwenkt es zur Überführung aus der Trennstellung in die Offenstellung abwärts. Dadurch wird das Auslassen von in der Trennstellung auf dem Trennelement aufliegendem Erntegut zumindest erleichtert oder unterstützt.

Bevorzugt ist das Trennelement an der Bindeeinrichtung gelagert. Insbesondere ist das Trennelement schwenkbar relativ zu einem in der Bindestellung der Bindeeinrichtung der Ballenkammer nächstkommenden Bindearm. Die Schwenkachse, um die das Stellelement dabei relativ zum Bindearm oder in einer alternativen Ausbildung relativ zu einem Maschinenrahmen schwenkbar ist, befindet sich dabei bevorzugt oberhalb des Aufnahmeraumes.

Vorzugsweise ist das Trennelement derart mit der Bindeeinrichtung gekoppelt, dass das Trennelement mit der Überführung der Bindeeinrichtung von der Ausgangsstellung in die Bindestellung in die Trennstellung zwangsgeführt wird. Dabei ist zur Verstellung des Trennelementes insbesondere kein von der Bindeeinrichtung abweichendes, gesondertes Stellorgan nötig. Insbesondere wird jede Überführung des Trennelementes unmittelbar durch eine Überführung der Bindeeinrichtung eingeleitet. Dabei korrespondiert die Trennstellung des Trennelementes zeitlich bevorzugt zur Bindestellung der Bindeeinrichtung. Eine bevorzugte Zwangsführungsanordnung zwischen dem Trennelement und der Bindeeinrichtung wird durch zumindest einen exzentrisch am Trennelement angelegten Hebel umgesetzt, welchen anderenends an einem Bauteil der Bindeeinrichtung gelagert ist. Durch diese Ausbildung lässt sich die erfindungsgemäße Wirkung besonders einfach erreichen, insbesondere ohne Änderungen an dem konventionellen, effizienten Ballenpressenaufbau vornehmen zu müssen.

In einer vorteilhaften Ausgestaltung der Erfindung liegt das Trennelement in der Trennstellung an einem Abstreifelement an. Das Abstreifelement ist relativ zur Ballenkammer ortsfest angeordnet und benachbart zu einem Presselement positioniert, das den zweiten Spalt mit ausbildet. Insbesondere ist das Abstreifelement auch ortsfest relativ zu einer Rotationsachse des Presselementes. Das Trennelement liegt in der Trennstellung insbesondere unmittelbar am Abstreifelement an und bildet damit zumindest abschnittweise einen geringfügigen Spalt aus, durch den Erntegut jedoch nicht in signifikantem Ausmaß hinaustreten kann. Das Abstreifelement hat nur einen geringfügigen Abstand vom genannten Presselement und streift im Betrieb gegebenenfalls daran anhaftendes Erntegut wirksam ab. Der tiefstgelegene Teil des Aufnahmeraumes liegt bevorzugt unmittelbar oberhalb eines Kontaktbereiches zwischen Abstreifelement und Trennelement. Durch diese gemeinsame Ausbildung des Aufnahmeraumes lässt sich das Erntegut besonders einfach sowohl aufnehmen und halten als auch freigeben.

Alternativ zum Abstreifelement liegt das Trennelement in der Trennstellung schleifend am im Betrieb umlaufenden Presselement an oder hat einen nur geringen Abstand davon, so dass das Erntegut nicht in signifikantem Ausmaß zwischen dem Presselement und dem Trennelement hindurchtreten kann.

Das Abstreifelement ist zumindest teilweise zwischen zwei den ersten Spalt begrenzenden Presselementen angeordnet. Dadurch kann es zum einen den Aufnahmeraum wie vorbeschrieben mit ausbilden und zum anderen eine Führung des Bindemittels durch den ersten Spalt unterstützen.

In einer vorteilhaften Ausgestaltung der Erfindung ist das Trennelement in der Offenstellung zumindest teilweise zwischen dem zweiten Spalt und zumindest einem Teil der Bindeeinrichtung angeordnet. Insbesondere ist das Trennelement als Schutzwandung zwischen dem zweiten Spalt und der Bindeeinrichtung angeordnet, so dass durch den zweiten Spalt hindurchgetretenes Erntegut sich nicht an einem Teil der in der Ausgangsstellung befindlichen Bindeeinrichtung ablagern kann, sondern vom Trennelement abgeleitet wird. Dazu ist die vorbeschrieben Oberfläche in der Offenstellung bevorzugt zumindest im Wesentlichen vertikal orientiert und/oder hängt das Trennelement an der Bindeeinrichtung frei hinunter. Durch diese Ausbildung kommt im Trennelement sowohl in der Trennstellung als auch in der Offenstellung eine entscheidende Funktion zu. Durch die vorbeschriebene Positionierung in der Offenstellung ist insbesondere eine Beeinträchtigung des zur Einleitung eines Bindezyklus durch den ersten Spalt hindurchzuführenden Bindemittelendes verhindert.

Weitere Einzelheiten und Vorteile der Erfindung sind den nachfolgend beschrieben, schematisch dargestellten Ausführungsbeispielen zu entnehmen; es zeigen:
Fig. 1 einen Längsschnitt einer ersten erfindungsgemäßen, schematisch dargestellten Ballenpresse,
Fig. 2 einen Längsschnitt eines Teils einer zweiten erfindungsgemäßen Ballenpresse mit dem Trennelement in der Offenstellung,
Fig. 3 den Längsschnitt gemäß Fig. 2 mit dem Trennelement in der Trennstellung,
Fig. 4 einen Längsschnitt eines Teils einer weiteren erfindungsgemäßen Ballenpresse mit dem Trennelement in der Offenstellung,
Fig. 5 den Längsschnitt gemäß Fig. 4 mit dem Trennelement in der Trennstellung.

Die nachfolgend erläuternden Merkmale der erfindungsgemäßen Ausführungsbeispiele können auch einzeln oder in anderen Kombinationen als dargestellt oder beschrieben Gegenstand der Erfindung sein, stets aber zumindest in Kombination mit den Merkmalen des Anspruches 1. Sofern sinnvoll sind funktional gleichwirkende Teile mit identischen Bezugsziffern versehen.

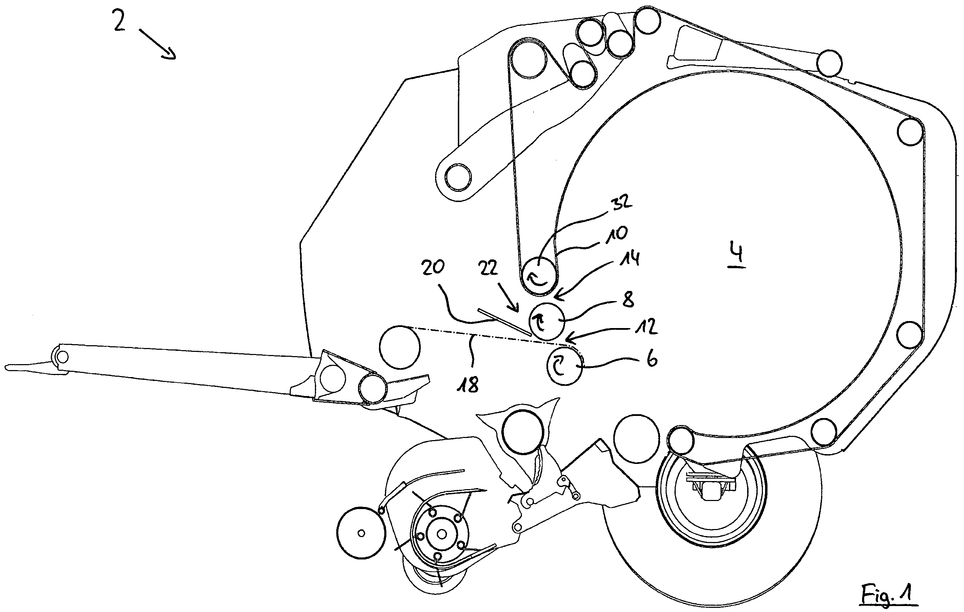

Fig. 1 zeigt einen schematisch dargestellten Längsschnitt einer erfindungsgemäßen Rundballenpresse 2 mit einer Ballenkammer 4. Diese wird unter anderem umgrenzt von den im Betrieb umlaufenden Presselementen 6, 8, 10. Zwischen einem ersten Paar von Presselementen 6, 8 ist ein erster Spalt 12 vorgesehen. Zwischen einem zweiten Paar von Presselementen 8, 10 ist ein zweiter Spalt 14 vorgesehen. Die Presselemente 6, 8, 10 laufen im Betrieb im Uhrzeigersinn um.

Während die ersten Presselemente 6, 8 als Walzen ausgebildet sind, ist das weitere Presselement 10 als im Betrieb umlaufendes, geschlossenes Band ausgebildet. Bei der Nutzung eines nicht geschlossenen Bandes wird der zweite Spalt oberseitig gemeinsam durch das Band 10 und die Umlenkwalze 32 ausgebildet.

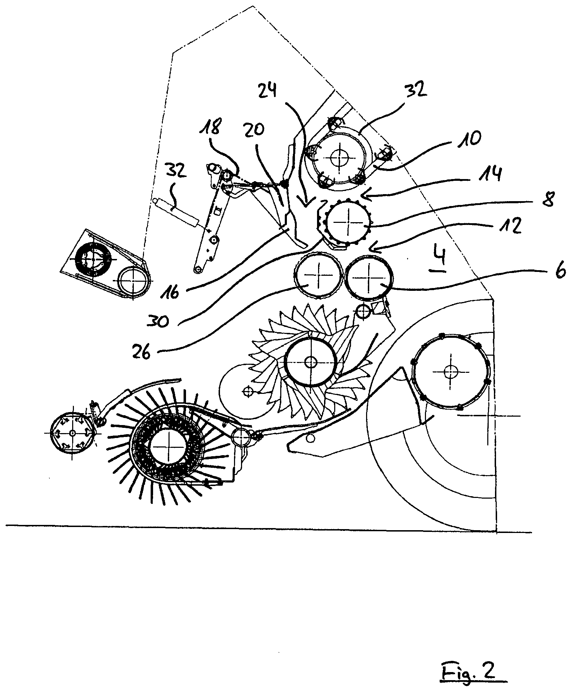

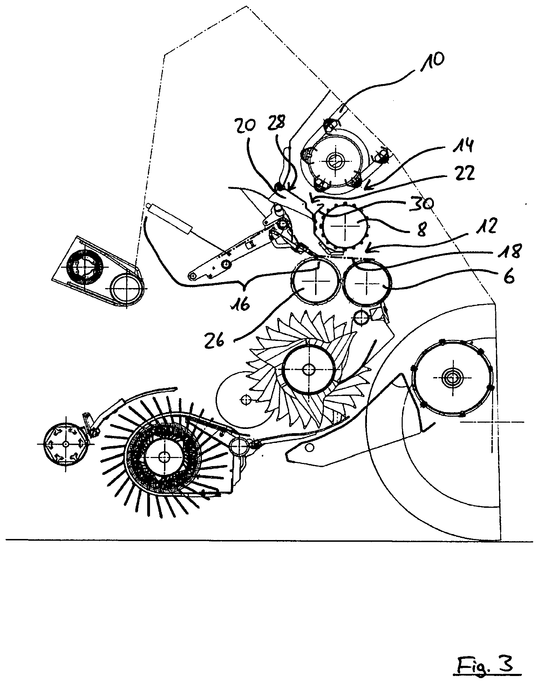

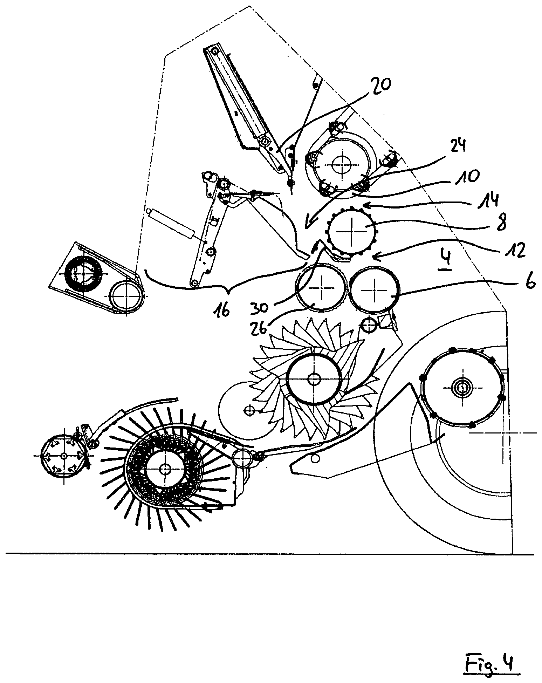

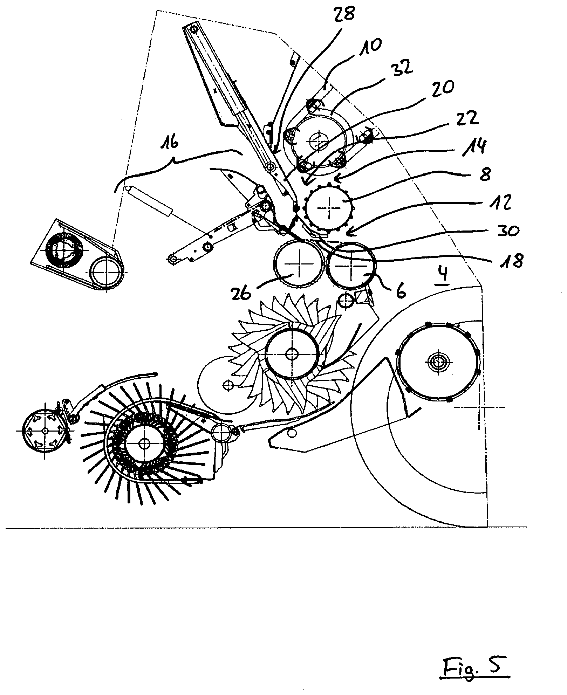

Die Ballenpresse 2 hat eine in Fig. 1 nicht dargestellte Bindeeinrichtung 16 (vgl. Fig. 2 bis 5), die durch ein Stellorgan 32 von einer Ausgangsstellung (vgl. Fig. 2 und 4) in eine Bindestellung (vgl. Fig. 3 und 5) überführbar ist. In der Bindestellung ist die Bindeeinrichtung 16 zur Führung eines Bindemittels 18 durch den ersten Spalt 12 in die Ballenkammer 4 ausgebildet.

Fig. 1 zeigt ein Trennelement 20 in einer Trennstellung. In dieser grenzt das Trennelement 20 einen an den zweiten Spalt 14 angrenzenden Aufnahmeraum 22 von der Bindeeinrichtung 16 ab. Der Aufnahmeraum 22 dient zur Aufnahme von durch den zweiten Spalt 14 hindurchgetretenen Erntegut. Dieses lagert sich zwischen dem Trennelement 20 und dem zweiten Presselement 8 ab.

Das Trennelement 20 ist von der Trennstellung in eine Offenstellung überführbar. In der Offenstellung dient das Trennelement 20 zur Ausbildung einer Auslassöffnung 24 (vgl. Fig. 2) für zuvor aufgenommenes Erntegut. Dieses kann durch die Auslassöffnung 24 den Raum verlassen, welcher zuvor der Aufnahmeraum 22 war. Insbesondere befindet sich das Trennelement 20 dann in der Trennstellung, wenn die Bindeeinrichtung 16 in der Bindestellung angeordnet ist und dann in der Offenstellung, wenn die Bindeeinrichtung 16 in der Ausgangsstellung angeordnet ist. Das Trennelement 20 ist in der Trennstellung oberhalb zumindest eines Teils der Bindeeinrichtung 16 und/oder einer Bindemittelzuführwalze 26 angeordnet.

In der Ausgestaltung der Erfindung gemäß den Fig. 4 und 5 ist das Trennelement verschieblich gelagert. Von der Trennstellung in der Offenstellung wird das Trennelement 20 dabei anteilig aufwärts verschoben. Bei der Ballenpresse 2 gemäß den Fig. 2 und 3 ist das Trennelement 20 schwenkbeweglich an der Bindeeinrichtung 16 gelagert. Dabei wird das Trennelement 20 durch eine Zwangsführung dann in die Trennstellung überführt, wenn die Bindeeinrichtung 16 in die Bindestellung überführt wird.

Das Trennelement 20 hat in der Trennstellung eine dem Aufnahmeraum 22 zugewandte Oberfläche 28, die relativ zu einer Horizontalen eine Steigung von ca. 30° (vgl. Fig. 1) bzw. ca. 60° (vgl. Fig. 3 und 5) hat. Dem Trennelement 20 in der Trennstellung gegenüberliegend wird der Aufnahmeraum 22 durch ein Abstreifelement 30 mit ausgebildet, dass ortsfest und benachbart zum Presselement 8 angeordnet ist. Das Trennelement 20 ist in der Offenstellung insbesondere zwischen dem zweiten Spalt 14 und zumindest einem Teil der Bindeeinrichtung 16 angeordnet (vgl. Fig. 2).

## Patentansprüche

1. Ballenpresse für landwirtschaftliches Erntegut mit einer Mehrzahl von eine Ballenkammer (4) umgrenzenden und im Betrieb umlaufenden Presselementen (6, 8, 10), wobei zwischen einem ersten Paar von Presselementen (6, 8) ein erster Spalt (12) und zwischen einem zweiten Paar von Presselementen (8, 10) ein zweiter Spalt (14) vorgesehen ist, mit einer Bindeeinrichtung (16), die von einer Ausgangsstellung in eine Bindestellung überführbar ist, in der die Bindeeinrichtung (16) zur Führung eines Bindemittels (18) durch den ersten Spalt (12) in die Ballenkammer (4) ausgebildet ist, und mit einem Trennelement (20), **dadurch gekennzeichnet, dass** das Trennelement (20) in einer Trennstellung einen an den zweiten Spalt (14) angrenzenden Aufnahmeraum (22) zur Aufnahme von durch den zweiten Spalt (14) und/oder an den umlaufenden Presselementen (6, 8, 10) hindurchgetretenem Erntegut von der Bindeeinrichtung (16) in der Bindestellung abgrenzt.

2. Ballenpresse nach Anspruch 1, **dadurch gekennzeichnet, dass** das Trennelement (20) von der Trennstellung in eine Offenstellung zur Ausbildung einer Auslassöffnung (24) für aufgenommenes Erntegut überführbar ist.

3. Ballenpresse nach einem der vorhergehenden Ansprüche, **dadurch gekennzeichnet, dass** das Trennelement (20) in der Trennstellung oberhalb zumindest eines Teils der Bindeeinrichtung (16) angeordnet ist.

4. Ballenpresse nach einem der vorhergehenden Ansprüche, **dadurch gekennzeichnet, dass** das Trennelement (20) in der Trennstellung oberhalb einer von der Ballenkammer (4) beabstandeten Bindemittelzuführwalze (26) angeordnet ist.

5. Ballenpresse nach einem der vorhergehenden Ansprüche, **dadurch gekennzeichnet, dass** das Trennelement (20) den Aufnahmeraum (22) über eine Breite zumindest mitbegrenzt, die zumindest im Wesentlichen der Breite der Ballenkammer (4) entspricht.

6. Ballenpresse nach einem der vorhergehenden Ansprüche, **dadurch gekennzeichnet, dass** eine in der Trennstellung dem Aufnahmeraum (22) zugewandte Oberfläche (28) des Trennelementes (20) relativ zu einer Horizontalen zumindest abschnittsweise eine Steigung von zumindest 30°, bevorzugt von zumindest 45°, besonders bevorzugt von zumindest 60° hat.

7. Ballenpresse nach einem der vorhergehenden Ansprüche, **dadurch gekennzeichnet, dass** das Trennelement (20) translatorisch beweglich, insbesondere verschieblich, gelagert ist.

8. Ballenpresse nach einem der vorhergehenden Ansprüche, **dadurch gekennzeichnet, dass** das Trennelement (20) schwenkbeweglich gelagert ist.

9. Ballenpresse nach Anspruch 7 oder 8, **dadurch gekennzeichnet, dass** das Trennelement (20) an der Bindeeinrichtung (16) gelagert ist.

10. Ballenpresse nach Anspruch 9, **dadurch gekennzeichnet, dass** das Trennelement (20) derart mit der Bindeeinrichtung (16) gekoppelt ist, dass das Trennelement (20) mit der Überführung der Bindeeinrichtung (16) von der Ausgangsstellung in die Bindestellung in die Trennstellung zwangsgeführt wird.

11. Ballenpresse nach einem der vorhergehenden Ansprüche, **dadurch gekennzeichnet, dass** das Trennelement (20) in der Trennstellung an einem relativ zur Ballenkammer (4) ortsfest und benachbart zu einem der den zweiten Spalt (14) mitausbildenden Presselemente (8) angeordneten Abstreifelement (30) anliegt.

12. Ballenpresse nach Anspruch 11 **dadurch gekennzeichnet, dass** das Abstreifelement (30) zumindest teilweise zwischen zwei den ersten Spalt begrenzenden Presselementen (6, 8) angeordnet ist.

13. Ballenpresse nach einem der vorhergehenden Ansprüche, **dadurch gekennzeichnet, dass** das Trennelement (20) in der Offenstellung zumindest teilweise zwischen dem zweiten Spalt (14) und zumindest einem Teil der Bindeeinrichtung (16) angeordnet ist.

## Claims

1. Baler for agricultural crops, comprising a plurality of pressing elements (6, 8, 10) which surround a bale chamber (4) and rotate during operation, a first gap (12) being provided between a first pair of pressing elements (6, 8) and a second gap (14) being provided between a second pair of pressing elements (8, 10), comprising a binding device (16) which can be transferred from a starting position into a binding position in which the binding device (16) is designed to guide a binding material (18) through the first gap (12) into the bale chamber (4), and comprising a separating element (20), **characterised in that**, in a separating position, the separating element (20) separates a receiving space (22) from the binding device (16) in the binding position, which receiving space adjoins the second gap (14) and is intended for receiving harvested crop that has passed through the second gap (14) and/or on the rotating pressing elements (6, 8, 10).

2. Baler according to claim 1, **characterised in that** the separating element (20) can be transferred from the separating position into an open position in order to form an outlet opening (24) for collected harvested crop.

3. Baler according to either of the preceding claims, **characterised in that**, in the separating position, the separating element (20) is arranged above at least part of the binding device (16).

4. Baler according to any of the preceding claims, **characterised in that**, in the separating position, the separating element (20) is arranged above a binding material supply roller (26) which is spaced apart from the bale chamber (4).

5. Baler according to any of the preceding claims, **characterised in that** the separating element (20) at least delimits the receiving space (22) over a width which at least substantially corresponds to the width of the bale chamber (4).

6. Baler according to any of the preceding claims, **characterised in that** a surface (28) of the separating element (20) that faces the receiving space (22) in the separating position has, at least in portions, an inclination of at least 30°, preferably at least 45°, particularly preferably at least 60°, relative to a horizontal.

7. Baler according to any of the preceding claims, **characterised in that** the separating element (20) is mounted so as to be movable in translation, in particular slidable.

8. Baler according to any of the preceding claims, **characterised in that** the separating element (20) is pivotably mounted.

9. Baler according to either claim 7 or claim 8, **characterised in that** the separating element (20) is mounted on the binding device (16).

10. Baler according to claim 9, **characterised in that** the separating element (20) is coupled to the binding device (16) such that the separating element (20) is forced into the separating position by the binding device (16) transferring from the starting position into the binding position.

11. Baler according to any of the preceding claims, **characterised in that**, in the separating position, the separating element (20) abuts against a scraper element (30) which is arranged so as to be stationary relative to the bale chamber (4) and arranged adjacent to a pressing element (8) that forms the second gap (14).

12. Baler according to claim 11, **characterised in that** the scraper element (30) is arranged at least in part between two pressing elements (6, 8) which delimit the first gap.

13. Baler according to any of the preceding claims, **characterised in that**, in the open position, the separating element (20) is arranged at least in part between the second gap (14) and at least part of the binding device (16).

## Revendications

1. Presse à balle pour des produits agricoles récoltés comportant un ensemble d'éléments de presse (6, 8, 10) tournants délimitant une chambre à balle (4), et
un premier intervalle (12) étant formé entre une première paire d'éléments de presse (6, 8) et un second intervalle (14) étant formé entre une seconde paire d'éléments de presse (8, 10),
- un noueur (16) qui peut être transféré d'une position dégagée à une position de nouage dans laquelle le noueur (16) guide une ficelle (18) à travers le premier intervalle (12) dans la chambre à balle (4), et
- un élément séparateur (20),
presse **caractérisée en ce que**
l'élément séparateur (20) en position de séparation, délimite une chambre de réception (22) adjacente au second intervalle (14) pour recevoir le produit de récolte ayant passé le second intervalle (14) et/ou sur les éléments de presse tournants (6, 8, 10), par le noueur (16) en position de nouage.

2. Presse à balle selon la revendication 1,
**caractérisée en ce que**
l'élément séparateur (20) passe de la position de séparation en une position ouverte pour former un orifice de sortie (24) pour les produits de récolte reçus.

3. Presse à balle selon l'une des revendications précédentes,
**caractérisée en ce que**
l'élément séparateur (20) est au-dessus d'au moins une partie du noueur (16) en position de séparation.

4. Presse à balle selon l'une des revendications précédentes,
**caractérisée en ce que**
l'élément séparateur (20) en position de séparation est au-dessus d'un cylindre d'alimentation en ficelle (26) écarté de la chambre à balle (4).

5. Presse à balle selon l'une des revendications précédentes,
**caractérisée en ce que**
l'élément séparateur (20) délimite la chambre réceptrice (22) au moins sur une largeur correspondant au moins pratiquement à la largeur de la chambre à balle (4).

6. Presse à balle selon l'une des revendications précédentes,
**caractérisée en ce que**
une surface supérieure (28) de l'élément séparateur (20) tournée vers la chambre de réception (22) en position de séparation présente, par rapport à la direction horizontale, au moins partiellement, une pente d'au moins 30°, de préférence d'au moins 45° et d'une manière particulièrement préférentielle, d'au moins 60°.

7. Presse à balle selon l'une des revendications précédentes,
**caractérisée en ce que**
l'élément séparateur (20) est mobile en translation, notamment en coulissement.

8. Presse à balle selon l'une des revendications précédentes,
**caractérisée en ce que**
l'élément séparateur (20) est monté mobile en pivotement.

9. Presse à balle selon la revendication 7 ou 8,
**caractérisée en ce que**
l'élément séparateur (20) est monté sur le noueur (16).

10. Presse à balle selon la revendication 9,
**caractérisée en ce que**
l'élément séparateur (20) est couplé au noueur (16) de façon que l'élément séparateur (20) soit conduit de force dans la position de séparation lors du passage du noueur (16) de sa position dégagée à sa position de nouage.

11. Presse à balle selon l'une des revendications précédentes,
**caractérisée en ce que**
l'élément séparateur (20) en position de séparation, s'applique contre un racleur (30) installé de manière fixe par rapport à la chambre à balle (4) et voisin d'un élément de presse (8) qui fait partie du second intervalle (14).

12. Presse à balle selon la revendication 11,
**caractérisée en ce que**
l'élément racleur (30) est au moins en partie entre deux éléments de presse (6, 8) délimitant le premier intervalle.

13. Presse à balle selon l'une des revendications précédentes,
**caractérisée en ce que**
l'élément séparateur (20), en position ouverte, est situé au moins en partie entre le second intervalle (14) et au moins une partie du noueur (16).
